# EUROPEAN PATENT APPLICATION

(11) **EP 2 584 421 A2**
(43) Date of publication of application: **24.04.2013**
(21) Application number: 12189047.9
(22) Date of filing: 18.10.2012
(51) Int. Cl.: G05B 23/02

(54) **Gas turbine monitoring system**

(30) Priority: 21.10.2011 US 201113278687
(71) Applicant: General Electric Company, Schenectady, NY 12345 (US)
(72) Inventor: Thatikonda, Ravi Kanth Sai, 500081 Hyderabad (IN); Nemani, Subhash, 500081 Hyderabad (IN)
(74) Representative: Picker, Madeline Margaret

(57) **Abstract**

A gas turbine monitoring system (4) operably connected to a gas turbine controller (10). The gas turbine monitoring system (4) includes an interface (6) including at least one computing device configured to: obtain data about a gas turbine event from the gas turbine controller (10); write the data about the gas turbine event to a storage component (122) in the interface (6); and provide the data about the gas turbine event to the gas turbine controller (10) either continuously or upon request for the data from the gas turbine controller.

## Description

### BACKGROUND OF THE INVENTION

The subject matter disclosed herein relates to a data monitoring system for a gas turbine. Specifically, the subject matter disclosed herein relates a system for storing and processing historical data from a gas turbine to provide that data back to the gas turbine's controller, enabling real-time adjustment of gas turbine operation.

Current data systems used in conjunction with gas turbine systems employ memory systems such as flash-memory, non-volatile random-access memory (NVRAM), etc. in the gas turbine's controller. These conventional memory systems store only a relatively small amount of data about the gas turbine's operation, as theses systems are limited to the storage space on the memory chip. The remainder of the operational data is stored in a personal computer (PC), off-line, in the form of historian or trip logs (e.g., as a backup data store). The data stored in the PC is not integrated into the run-time operation of the gas turbine, and is not accessible by the controller. As the controller can only hold a small portion of the operational data (via its flash memory), and the PC storing the remainder of the data is disconnected from the controller, that controller can fail to provide run-time modifications to the gas turbine's operation, especially in the case of complex algorithms such as artificial neural networks (or, ANNs).

### BRIEF DESCRIPTION OF THE INVENTION

A gas turbine monitoring system is disclosed. In one embodiment, the gas turbine monitoring system can be operably connected to a gas turbine controller. The gas turbine monitoring system can include an interface including at least one computing device configured to: obtain data about a gas turbine event from the gas turbine controller; write the data about the gas turbine event to a storage component in the HMI; and provide the written data about the gas turbine event to the gas turbine controller either continuously or upon request for the data from the gas turbine controller.

A first aspect of the invention includes a gas turbine monitoring system operably connected to a gas turbine controller, the monitoring system comprising: a an interface including at least one computing device configured to perform the following: obtain data about a gas turbine event from the gas turbine controller; write the data about the gas turbine event to a storage component in the HMI; and provide the written data about the gas turbine event to the gas turbine controller either continuously or upon request for the data from the gas turbine controller.

A second aspect of the invention includes a computer system comprising: at least one computing device including a human-machine interface (HMI) configured to perform the following: obtain data about a gas turbine event directly from a gas turbine controller; write the data about the gas turbine event to a storage component in the HMI; and provide the written data about the gas turbine event directly to the gas turbine controller either continuously or upon request for the data from the gas turbine controller.

A third aspect of the invention includes a system comprising: a gas turbine apparatus including a gas turbine controller; and a gas turbine monitoring system operably connected to the gas turbine controller, the monitoring system including: an interface including at least one computing device configured to perform the following: obtain data about a gas turbine event from the gas turbine controller; write the data about the gas turbine event to a storage component in the HMI; and provide the written data about the gas turbine event to the gas turbine controller during operation of the gas turbine, either continuously or upon request for the data from the gas turbine controller.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic depiction of an environment including a gas turbine monitoring system according to embodiments of the invention.
FIG. 2 shows an illustrative method flow diagram according to embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

The subject matter disclosed herein relates to a monitoring (or, feedback and storage) system for a gas turbine. Specifically, the subject matter disclosed herein relates a system for storing and processing historical data from a gas turbine to provide that data back to the gas turbine's controller, enabling real-time adjustment of gas turbine operation.

As noted herein, current data systems used in conjunction with gas turbine systems can employ flash memory or other types of semiconductor memory in the gas turbine's controller, which stores only a relatively small amount of data about the gas turbine's operation. The storage capacity for operational data is limited by the processing and space constraints of the controller's memory. The remainder of the operational data is stored in a personal computer (PC) off-line (e.g., as a backup data store). The data stored in the PC is not integrated into the run-time operation of the gas turbine, and is not accessible by the controller. As the controller can only hold a small portion of the operational data (via its flash memory), and the PC storing the remainder of the data is disconnected from the controller, that controller can fail to provide run-time modifications to the gas turbine's operation.

In contrast to the conventional systems, aspects of the invention provide for a gas turbine monitoring system that uses an interface (e.g., a human-machine interface (HMI)) to store and manage data in real-time, for read-back to a gas turbine controller. It is understood that the term "monitoring", as used herein, can relate to both the storing of data and providing of that data for feedback purposes. The interface can include a PC or other conventional data store built into the interface, along with a processor. When an event (e.g., a fault) is indicated in the operational data, the interface may count the fault occurrence and write that occurrence to the interface data store (e.g., the HMI PC data store). Additionally, the interface can continuously store/write data, and continuously provide the written data for use in other functions (e.g., in certain algorithms or systems using process values). The interface (e.g., the HMI) has read-write access to its data files so that it can manipulate the stored data to fit the appropriate control system algorithm(s). The interface can provide this event data (e.g., indicating a fault occurrence) back to the gas turbine's controller, either continuously, or upon request from the controller. Historical gas turbine operational data can be written during online operation, and stored at the interface PC (e.g., the HMI PC). Additionally, this historical data can be backed up on another PC (or conventional storage device) stored on a portion of a shared plant data highway (PDH) network or other conventional data network.

In one embodiment of the invention, a gas turbine monitoring system (or, feedback/storage system) is disclosed. In this case, the gas turbine monitoring system can be operably connected to a gas turbine controller. The monitoring system can include an interface (e.g., a human-machine interface (HMI)) including at least one computing device configured to: obtain data about a gas turbine event from the gas turbine controller; write the data about the gas turbine event to a storage component in the HMI; and provide the data about the gas turbine event to the gas turbine controller, either upon request, or continuously, for the data from the gas turbine controller. The system can be configured to provide the feedback data, or recorded process data, back to the controller in real-time, e.g., while the gas turbine is operating. This allows the controller to utilize the real-time read-write functions of the HMI to better control operation of the gas turbine.

As will be appreciated by one skilled in the art, the gas turbine monitoring system described herein may be embodied as a system(s), method(s) or computer program product(s), e.g., as part of a gas turbine monitoring system. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, or device. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer (or controller) program code for carrying out operations of the present invention may be written in any programming language(s), for example, but not limited to, an object oriented programming language such as Java, Magik, Smalltalk, C++ or the like and conventional procedural programming languages, such as the "C" programming language, proprietary software, controller language, embedded or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Embodiments of the present invention are described herein with reference to data flow illustrations and/or block diagrams of methods, apparatus (systems) and computer program products according to embodiments of the invention. It will be understood that each block of the data flow illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

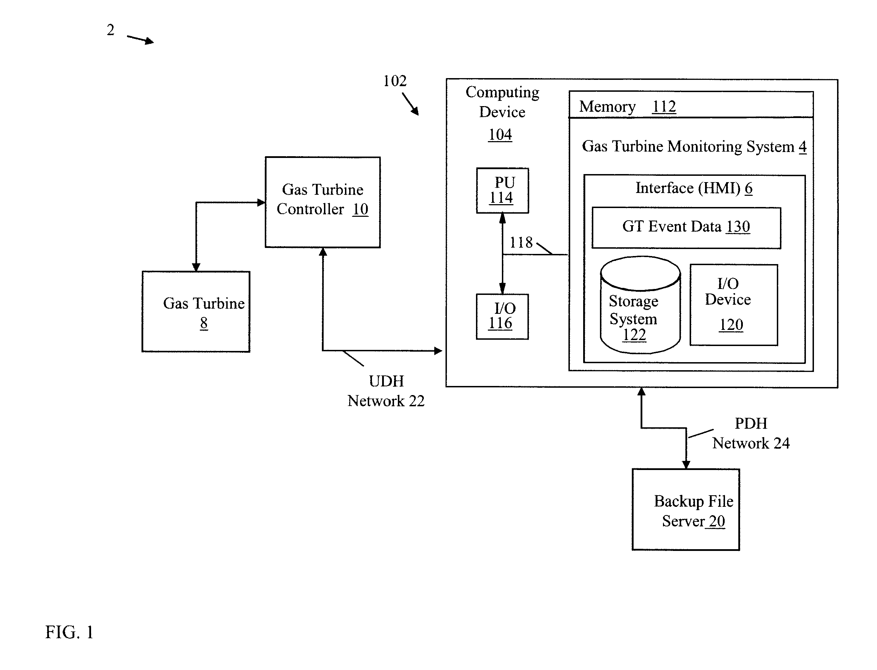

Turning to FIG. 1, an illustrative environment 2 including a gas turbine monitoring (e.g., feedback/storage) system 4 is shown according to embodiments of the invention. Environment 2 includes a computer infrastructure 102 that can perform the various processes described herein. In particular, computer infrastructure 102 is shown including a computing device 104 that comprises the gas turbine feedback / storage system 4, which enables computing device 104 to provide real-time and on-demand feedback to a gas turbine controller 10 for controlling a gas turbine 8, by performing the processes of the disclosure. It is understood that the gas turbine feedback / storage system 4 includes an interface (e.g., a human machine interface (HMI)) 6 configured to execute some or all of the functions of the gas turbine monitoring system 4 described herein. The interface 6 can include one or more I/O devices 120 having one or more displays, actuatable buttons, touch screens, etc. for allowing a human operator to interact with the gas turbine monitoring system 4. In some cases, the interface 6 can include a standard industrial human-machine/man-machine interface (HMI/MMI) system which can act as an interface between human and machine, human and plant, machine and software etc.

Computing device 104 is shown including a memory 112, a processor (PU) 114, an input/output (I/O) interface 116, and a bus 118. Further, computing device 104 is shown including an I/O device/resource 120 and a storage system 122 (e.g., in the HMI 6). As is known in the art, in general, processor 114 executes computer program code, such as gas turbine monitoring system 4, that is stored in memory 112 and/or storage system 122. While executing computer program code, processor 114 can read and/or write data, such as gas turbine (GT) event data 130 to/from memory 112, storage system 122, and/or I/O interface 116. Bus 118 provides a communications link between each of the components in computing device 104. I/O device 120 can comprise any device that enables a user to interact with computing device 104 or any device that enables computing device 104 to communicate with one or more other computing devices. Input/output devices (including but not limited to keyboards, displays, pointing devices, etc.) can be coupled to the system either directly or through intervening I/O controllers.

As shown in FIG. 1 environment 2 may optionally include the gas turbine controller 10 operably connected to the gas turbine 8 and the computing device 104, where the computing device 104 and controller 10 are connected via a unit data highway (UDH) network 22, or any type of conventional network, for example, an industrial / home /IP / serial network. Also shown in the environment 2 is a backup file server 20 operably connected to the computing device 104 via a plant data highway (PDH) network 24 (or other conventional network noted herein). Each of the gas turbine controller 10 and the backup file server 20 can be connected to the gas turbine monitoring system 4 (via computing device 104) via conventional means (e.g., via wireless or hard-wired means).

In any event, computing device 104 can comprise any general purpose computing article of manufacture capable of executing computer program code installed by a user (e.g., a personal computer, server, handheld device, etc.). However, it is understood that computing device 104 and gas turbine monitoring system 4 are only representative of various possible equivalent computing devices that may perform the various process steps of the disclosure. To this extent, in other embodiments, computing device 104 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, computer infrastructure 102 is only illustrative of various types of computer infrastructures for implementing the disclosure. For example, in one embodiment, computer infrastructure 102 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned and discussed further below, gas turbine monitoring system 4 has the technical effect of enabling computing infrastructure 102 to perform, among other things, the gas turbine feedback functions described herein. It is understood that some of the various components shown in FIG. 1 can be implemented independently, combined, and/or stored in memory for one or more separate computing devices that are included in computer infrastructure 102. Further, it is understood that some of the components and/or functionality may not be implemented, or additional schemas and/or functionality may be included as part of environment 2.

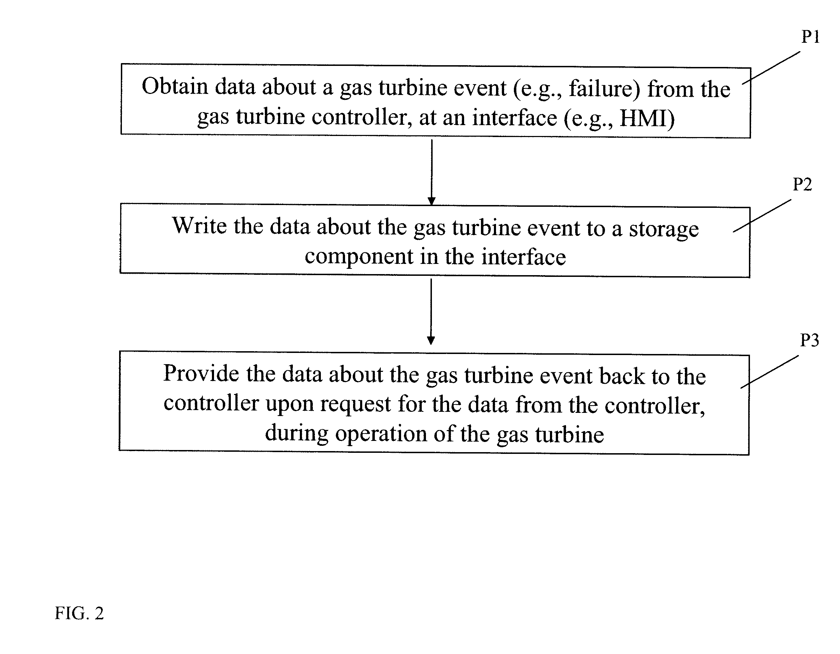

Turning to FIG. 2, and with continuing reference to FIG. 1, an illustrative method flow diagram is shown according to embodiments of the invention. The method can include, in process P1, obtaining data 130 about a gas turbine event (e.g., a failure event such as a trip event, a shutdown event, a runback event, a system failure event, a process failure event, a component failure event, a startup failure event, etc.) at a human machine interface (HMI) from a gas turbine controller 10. The gas turbine event can be a failure event, and the data 130 can include details about the operation of the turbine 8, including, e.g., megawatt generation, hours fired, shut-down time(s) and/or duration, fuel/air ratios, fluid flow rates and/or volumes, shaft rotational speed(s), etc. In any case, the data 130 about the gas turbine event can be stored at the HMI 6 and used for feedback purposes by the controller 10 in real time (e.g., during operation of the gas turbine 8. This data 130 may also be stored off-line in the backup file server 20 on a regular (e.g., predetermined) schedule, or as the data 130 is written to the HMI 6.

In process P2, the gas turbine monitoring system 4 can write the GT event data 130 received directly from the gas turbine controller 10 to the storage system 122 in the HMI 6. Storage system 122 can include sufficient memory to contain all the GT event data 130 accumulated over time, and is restricted only by the PC's hard disk/memory space. This space can be enhanced by adding supplementary storage medium like hard disc drive (HDD), DVD, tapes, servers etc. The interface (e.g., HMI) 6 can tally or otherwise count fault occurrences in the GT event data 130, and write those fault occurrences to the storage system 122 during operation of the turbine 8.

In process P3, the gas turbine monitoring system 4 can provide the GT event data 130 back to the gas turbine controller 10 in real time (e.g., on demand). In this case, the interface 6 fetches the GT event data 130 from its storage system 122 upon request from the gas turbine controller 10 during operation of the turbine 8. The gas turbine controller 10 can include one or more processors and associated algorithms for utilizing this GT event data 130 to modify a mode of operation of the turbine 8 during operation of the turbine (e.g., online).

Aspects of the invention allow for the storage of historical gas turbine operating data within the HMI, which is directly connected to the gas turbine controller. The limited flash memory of the gas turbine controller does not allow that controller to store this historical data, and as such, that data is conventionally stored in a remote (disconnected) data store. Aspects of the invention utilize the storage system with the HMI for maintaining this historical gas turbine operating data, and providing it back to the gas turbine controller during operation of the turbine. This allows the controller to continuously modify (or, fine tune) operation of the gas turbine (if necessary) based upon the historical data.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A gas turbine monitoring system operably connected to a gas turbine controller, the monitoring system comprising:
   an interface including at least one computing device configured to perform the following:
      obtain data about a gas turbine event from the gas turbine controller;
      write the data about the gas turbine event to a storage component in the interface; and
      provide the written data about the gas turbine event to the gas turbine controller either continuously, or upon request for the data from the gas turbine controller.
2. The gas turbine monitoring system of clause 1, wherein the at least one computing device is further configured to provide a copy of the data about the gas turbine event to an external backup file system.
3. The gas turbine monitoring system of clause 2, wherein the external backup file system is connected to a plant data highway (PDH) network.
4. The gas turbine monitoring system of clause 2, wherein the at least one computing device is configured to provide the copy of the data on a predetermined continuous schedule.
5. The gas turbine monitoring system of clause 1, wherein the gas turbine event is a fault event.
6. The gas turbine monitoring system of clause 1, wherein the HMI is either hard-wired or wirelessly connected with the gas turbine controller.
7. The gas turbine monitoring system of clause 1, wherein the HMI has both read access and write access to the storage component.
8. A computer system comprising:
   at least one computing device including a human-machine interface (HMI) configured to perform the following:
      obtain data about a gas turbine event directly from a gas turbine controller;
      write the data about the gas turbine event to a storage component in the HMI; and
      provide the written data about the gas turbine event directly to the gas turbine controller either continuously, or upon request for the data from the gas turbine controller.
9. The computer system of clause 8, wherein the at least one computing device is further configured to provide a copy of the data about the gas turbine event to an external backup file system.
10. The computer system of clause 9, wherein the external backup file system is connected to a plant data highway (PDH) network.
11. The computer system of clause 9, wherein the at least one computing device is configured to provide the copy of the data on a predetermined continuous schedule.
12. The computer system of clause 8, wherein the gas turbine event is a fault event.
13. The computer system of clause 8, wherein the HMI is either hard-wired or wirelessly connected with the gas turbine controller.
14. The computer system of clause 8, wherein the HMI has both read access and write access to the storage component.
15. A system comprising:
   a gas turbine apparatus including a gas turbine controller; and
   a gas turbine monitoring system operably connected to the gas turbine controller, the monitoring system including:
      a human-machine interface (HMI) including at least one computing device configured to perform the following:
         obtain data about a gas turbine event from the gas turbine controller;
         write the data about the gas turbine event to a storage component in the HMI; and
         provide the written data about the gas turbine event to the gas turbine controller, during operation of the gas turbine, either continuously or upon request for the data from the gas turbine controller.
16. The system of clause 15, wherein the at least one computing device is further configured to provide a copy of the data about the gas turbine event to an external backup file system.
17. The system of clause 16, wherein the external backup file system is connected to a plant data highway (PDH) network.
18. The system of clause 16, wherein the at least one computing device is configured to provide the copy of the data on a predetermined continuous schedule.
19. The system of clause 15, wherein the gas turbine event is a fault event.
20. The system of clause 15, wherein the at least one computing device has both read access and write access to the storage component.

## Claims

1. A computer system comprising:
an interface configured to perform the following:
obtain data about a gas turbine event directly from a gas turbine controller;
write the data about the gas turbine event to a storage component in the interface; and
provide the written data about the gas turbine event directly to the gas turbine controller either continuously, or upon request for the data from the gas turbine controller.

2. A gas turbine monitoring system operably connected to a gas turbine controller, the monitoring system comprising the computer system of claim 1.

3. A system comprising:
a gas turbine apparatus including a gas turbine controller; and
the gas turbine monitoring system of claim 2 operably connected to the gas turbine controller.

4. The system of any preceding claim, wherein the at least one computing device is further configured to provide a copy of the data about the gas turbine event to an external backup file system.

5. The system of claim 4, wherein the external backup file system is connected to a plant data highway (PDH) network.

6. The system of claim 4 or claim 5, wherein the at least one computing device is configured to provide the copy of the data on a predetermined continuous schedule.

7. The system of any preceding claim, wherein the gas turbine event is a fault event.

8. The system of any preceding claim, wherein the interface comprises a human-machine interface either hard-wired or wirelessly connected with the gas turbine controller.

9. The system of any preceding claim, wherein the interface has both read access and write access to the storage component.
